# EUROPÄISCHE PATENTSCHRIFT

(11) **EP 1 763 768 B1**
(45) Veröffentlichungstag und Bekanntmachung des Hinweises auf die Patenterteilung: **06.06.2012**
(21) Anmeldenummer: 05754927.1
(22) Anmeldetag: 06.06.2005
(51) Int. Cl.: G06F 13/42

(54) **VERFAHREN UND VORRICHTUNG ZUR STEUERUNG EINES BUSSYSTEMS SOWIE ENTSPRECHENDES BUSYSSTEM**
METHOD AND DEVICE FOR CONTROLLING A BUS SYSTEM, AND CORRESPONDING BUS SYSTEM
PROCÉDÉ ET DISPOSITIF POUR COMMANDER UN SYSTÈME DE BUS ET SYSTÈME DE BUS CORRESPONDANT

(30) Priorität: 26.06.2004 DE 102004030969
(43) Veröffentlichungstag der Anmeldung: 21.03.2007
(73) Patentinhaber: ROBERT BOSCH GMBH, 70442 Stuttgart (DE)
(72) Erfinder: HARTWICH, Florian, 72762 Reutlingen (DE)
(86) Internationale Anmeldenummer: PCT/EP2005/052577
(87) Internationale Veröffentlichungsnummer: WO 2006/000517

(56) Entgegenhaltungen:
- WO-A-02/075561
- WO-A-02/076031
- HARTWICH F ET AL: "Timing in the TTCAN network" PROCEEDINGS OF THE INTERNATIONAL CAN CONFERENCE, 28. Februar 2002 (2002-02-28), Seiten 1-8, XP002294580
- FUEHRER T ET AL: "TIME TRIGGERED COMMUNICATION ON CAN (TIME TRIGGERED CAN - TTCAN)" PROCEEDINGS OF THE INTERNATIONAL CAN CONFERENCE, 2000, Seiten 1-7, XP002905415

## Beschreibung

### Stand der Technik

Die Erfindung geht aus von einem Verfahren und einer Vorrichtung zur Steuerung eines Bussystems sowie entsprechendem Bussystem mit wenigstens zwei Teilnehmern, wobei ein erster Teilnehmer wiederholt eine Referenznachricht in wenigstens einem vorgebbaren zeitlichen Abstand über das Bussystem überträgt gemäß dem Oberbegriff der unabhängigen Ansprüche.

Eine solche Referenznachricht zur Erzeugung von Basiszyklen im Rahmen einer zeitgesteuerten Kommunikation auf einem Bussystem wird beispielsweise bei FlexRay oder auch bei TTCAN verwendet. Solche Bussysteme sind notwendig, da die Vernetzung von Steuergeräten, Sensorik und Aktuatorik in den letzten Jahren beim Bau von modernen Kraftfahrzeugen oder auch im Maschinenbau, insbesondere im Werkzeugmaschinenbereich, als auch in der Automatisierung, drastisch zugenommen hat. Synergieeffekte durch Verteilung von Funktionen auf mehrere Steuergeräte können dabei erzielt werden. Die Kommunikation zwischen verschiedenen Stationen solcher verteilten Systeme findet somit mehr und mehr über ein Bussystem statt. Der Kommunikationsverkehr auf dem Bussystem, Zugriffs- und Empfangsmechanismen sowie Fehlerbehandlung werden über ein Protokoll geregelt.

Das Protokoll, beispielsweise im Kfz-Bereich etabliert, ist CAN (Controller Area Network). Dies ist ein ereignisgesteuertes Protokoll, d.h. Protokollaktivitäten wie das Senden einer Nachricht werden durch Ereignisse initiiert, die ihrem Ursprung außerhalb des Kommunikationssystems, also des Bussystems, haben. Es handelt sich dabei also um ein ereignisgesteuertes Bussystem, welches insbesondere auch durch externe Ereignisse getriggert werden kann. Dadurch ist das CAN-Protokoll sehr flexibel und ein Hinzufügen weiterer Teilnehmer und Nachrichten ist damit problemlos möglich.

Ein alternativer Ansatz zur ereignisgesteuerten, spontanen Kommunikation ist der rein zeitgesteuerte Ansatz. Alle Kommunikationsaktivitäten auf dem Bus sind strikt periodisch. Protokollaktivitäten wie das Senden einer Nachricht werden nur durch das Fortschreiten einer für das gesamte Bussystem gültigen Zeit ausgelöst. Der Zugang zum Medium basiert auf der Zuteilung von Zeitbereichen, in denen ein Sender exklusives Senderecht hat. Das Protokoll ist vergleichsweise unflexibel, ein Hinzufügen von neuen Knoten ist nur dann möglich, wenn zuvor schon die entsprechenden Zeitbereiche frei gelassen wurden. Dieser Umstand erzwingt, die Nachrichtenreihenfolgen schon vor Inbetriebnahme festzusetzen. Dabei wird also ein Fahrplan erstellt, der den Anforderungen der Nachrichten bezüglich Wiederholrate, Redundanz, Deadlines usw. genügen muss. Die Positionierung der Nachrichten muss dabei innerhalb der Sendeperioden auf die Applikationen abgestimmt werden, die die Nachrichteninhalte produzieren, um die Latenzen zwischen Applikation und Sendezeitpunkt minimal zu halten. Wenn diese Abstimmung nicht erfolgt, würde der Vorteil der zeitgesteuerten Übermittlung, also minimale Latenz Jitter beim Senden der Nachricht am Bus, zerstört. Es werden somit hohe Anforderungen an die Planungstools bei rein zeitgesteuertem Ansatz gestellt.

Der im ISO 11898-4-Standard-Draft aus 2003 (ISO/TC 22/SC3) gezeigte Lösungsansatz eines zeitgesteuerten Controller Area Networks, dem sogenannten TTCAN (Time Triggered Controller Area Network) genügt den oben skizzierten Forderungen nach zeitgesteuerter Kommunikation sowie den Forderungen nach einem gewissen Maß an Flexibilität. Der TTCAN erfüllt dies durch den Aufbau von Kommunikationsrunden, sogenannten Basiszyklen (Basis Cycle), durch Senden einer Referenznachricht durch den Zeitgeber, den sogenannten Time Master. Dieses Basiszyklen werden dann ihrerseits in sogenannten exklusive Zeitfenster für periodische Nachrichten bestimmter Kommunikationsteilnehmer und in sogenannte arbitrierende Zeitfenster für spontane Nachrichten mehrerer Kommunikationsteilnehmer aufgeteilt.

Im Weiteren wird von einem TTCAN-Netzwerk als Bussystem ausgegangen, wobei dies nicht als einschränkend bezüglich des späteren Gegenstands der Erfindung zu verstehen ist. Vielmehr ist der Gegenstand der später erläuterten Erfindung auch bei weiteren, vergleichbaren Bussystemen wie z.B. Flex Ray einsetzbar.

In solchen Systemen wird die Kommunikationsrunde wie bereits erwähnt durch einen Basiszyklus bestimmt, also durch einen Zeitgeber oder ersten Teilnehmer, der wiederholt eine Referenznachricht in wenigstens einem vorgebbaren zeitlichen Abstand über das Bussystem überträgt, wobei die Referenznachricht durch eine zeitliche Triggerinformation ausgelöst wird, wenn eine Zeitinformation eine der Triggerinformation zugeordnete Zeitmarke erreicht. Die Zeitinformation im TTCAN ist beispielsweise die Zykluszeit oder Cycle Time, welche durch die lokale Zeit, also die lokale Uhr des Zeitgebers oder Timemasters, sowie durch die Referenznachricht vorgegeben ist. Wird durch diese Zeitinformation, also die Zykluszeit des TTCAN, eine bestimmte Zeitmarke erreicht, so wird immer bei Erreichen dieser Zeitmarke ein Trigger ausgelöst, um die jeweilige Referenznachricht zu starten. Dadurch gibt der Zeitmaster im Bussystem die Zeit für das Bussystem entsprechend dem Basiszyklus vor. Soll nun eine Verschiebung eines solchen Basiszyklus erfolgen, bietet z.B, das TTCAN-Protokoll die Möglichkeit, die Kommunikation durch Setzen eines Bit in einer solchen Referenznachricht zu verschieben. Eine solche Verschiebung ist insbesondere notwendig, um z.B. den TTCAN-BUS auf die Phase, insbesondere einer externen Zeitbasis, zu synchronisieren, beispielsweise wenn im TTCAN die Event-Synchronised Time Triggered Communication-Option verwendet wird. Allerdings sind dazu im TTCAN entsprechend der ISO 11 898-4 zwei Aktionen notwendig. Zum einen muss der Zeitmaster oder Host ein Bit, das sogenannte Next_is_Gap-Bit in der Referenznachricht setzen, um anschließend zu warten, bis der entsprechende Zeitabschnitt, der Time-Gap, in dem die Kommunikation angehalten ist, begonnen hat, um dann die nächste Referenznachricht durch das Aktivieren des Time-Triggers synchronisiert neu zu starten. Damit kann aber der Zeitmaster oder auch die externe Zeitbasis, insbesondere ein Host-Controller, eine solche Verschiebung oder Synchronisierung nicht mit einem einzigen Zugriff durchführen, sondern es muss auf die Rückmeldungen, also die Referenznachricht mit Next_is_Gap-Bit und auf den Beginn des Time-Gaps warten. Außerdem kann mit diesem Verfahren ein Basiszyklus, also ein Basic Cycle, nur verlängert werden, aber nicht verkürzt werden.

Damit stellt sich die Aufgabe, die Verschiebung des Basiszyklus, insbesondere zur Synchronisierung mit einer externen Zeitbasis, wie beispielsweise einem Host-Controller oder auch einem zweiten Bussystem oder Teilnehmer eines zweiten Bussystems bezüglich des Zugriffs und der Flexibilität zu verbessern.

### Vorteile der Erfindung

Zur Lösung dieser Aufgabe zeigt die Erfindung ein Verfahren zur Steuerung eines Bussystems sowie ein entsprechendes Bussystem mit wenigstens zwei Teilnehmern, wobei ein erster Teilnehmer wiederholt eine Referenznachricht in wenigstens einem vorgebbaren zeitlichen Abstand über das Bussystem überträgt, wobei die Referenznachricht durch eine zeitliche Triggerinformation ausgelöst wird, wenn eine Zeitinformation eine der Triggerinformationen zugeordnete Zeitmarke erreicht, wobei vorteilhafterweise die Zeitmarke wenigstens einmalig derart verändert wird, dass bei Erreichen der veränderten Zeitmarke durch die Zeitinformation eine zeitliche Verschiebung der Triggerinformation erfolgt.

Dadurch kann der Time-Trigger, also die Triggerinformation, für die Referenznachricht verschoben werden, ohne dass explizit eine Referenznachricht mit einem bestimmten Bit, eben dem Next_is_Gap-Bit gesendet werden muss und danach auch noch gewartet werden muss, bis das entsprechende Time-Gap, also der Zeitabschnitt, begonnen hat. Damit kann eine Verschiebung oder Synchronisierung, bezogen auf den Basiszyklus, beispielsweise durch einen externen Host-Controller, eben wie eine externe Zeitbasis eines Steuergerätes, eines Diagnosegerätes usw. oder auch eines zweiten Bussystems, wie eines mit dem erfindungsgemäßen Bussystem verkoppelten Flex Ray-Busses oder weiteren TTCAN-Bussystems, usw. oder auch durch den Zeitmaster des erfindungsgemäßen Bussystems selbst erfolgen, ohne dass auf Rückmeldungen des TTCAN-Controllers, also des Zeitmasters, eben der Referenznachricht mit Next_ is_Gap-Bit warten zu müssen. Durch die Veränderung der Zeitmarke, also des Time Mark, des Triggers, also der zugehörigen Triggerinformation, kann darüber hinaus der Basiszyklus nicht nur verlängert, sondern auch verkürzt werden, was eine deutlich höhere Flexibilität im Rahmen der Verschiebung bzw. Synchronisation, ermöglicht.

In einer zweckmäßigen Ausführungsform wird die Zeitmarke dadurch verändert, dass eine Zusatzzeitmarke anstelle der ursprünglichen Zeitmarke verwendet wird und zur Auslösung der Triggerinformation und damit der Referenznachricht auf die Zusatzzeitmarke anstelle der Zeitmarke zugegriffen wird.

In einer weiteren zweckmäßigen Ausführungsform wird die Zeitmarke durch Addition oder Subtraktion mit einem vorgebbaren Zeitmarkenwert verändert, so dass, wie schon gesagt, eine Verlängerung oder eine Verkürzung des zeitlichen Abstandes zweier Referenzmarken, also wenigstens eines solchen Basiszyklus, erfolgen kann. In einer weiteren Ausführungsform ist auch denkbar, dass die Zeitmarke durch Multiplikation mit oder Division durch einen vorgebbaren Zeitmarkenwert verändert wird, wobei auch hierdurch durch Wahl des vorgebbaren Zeitmarkenwertes bezüglich der Multiplikation oder der Division eine Verlängerung oder Verkürzung des Basiszyklus erzielbar ist.

Vorteilhafterweise ist die Zeitmarke aber nur innerhalb eines vorgebbaren Zeitbereiches veränderbar, beispielsweise insbesondere um eine zu starke Verlängerung oder Verkürzung und damit die Kollision beider Basiszyklen bzw. der darin übertragenen Nachrichten, zu vermeiden.

In einer vorteilhaften Ausgestaltung wird die veränderte Zeitmarke nur einmalig zur Auslösung der Triggerinformation verwendet, also insbesondere bei der Synchronisierung, und bei nachfolgenden Referenznachrichten wird die Triggerinformation durch die unveränderte Zeitmarke ausgelöst, so dass dann wieder konstante Basiszykluslängen entstehen. Grundsätzlich ist es nämlich nach dem o.g. Verfahren möglich, mehrere, auch aufeinander folgende Basiszyklen, insbesondere auch wiederholt, zu verlängert oder zu verkürzen.

Zweckmäßigerweise stellt die Zeitinformation ein Maß für den zeitlichen Abstand zwischen zwei Referenznachrichten, eben wie erwähnt als Zykluszeit des Bussystems dar.

In einer bevorzugten Ausführungsform handelt es sich bei dem Bussystem um ein TTCAN-Bussystem nach der genannten ISO 11 898-4-Norm, wobei aber, wie bereits in der Einleitung erwähnt, die Erfindung grundsätzlich weiterreichend ist.

Weitere Vorteile und vorteilhafte Ausgestaltungen ergeben sich aus der Beschreibung sowie den Merkmalen der Ansprüche.

### Zeichnung

Die Erfindung wird im Folgenden anhand der in der Zeichnung dargestellten Figuren näher erläutert. Dabei zeigt
Figur 1 ein allgemeines Bussystem, bezüglich dem die Erfindung einsatzbar ist.
Figur 2, bestehend aus Figur 2a, 2b und 2c, zeigt die Verschiebung der Referenznachricht gemäß unserer Erfindung im Vergleich zu unverschobenen Basiszyklen.

### Beschreibung der Ausführungsbeispiele

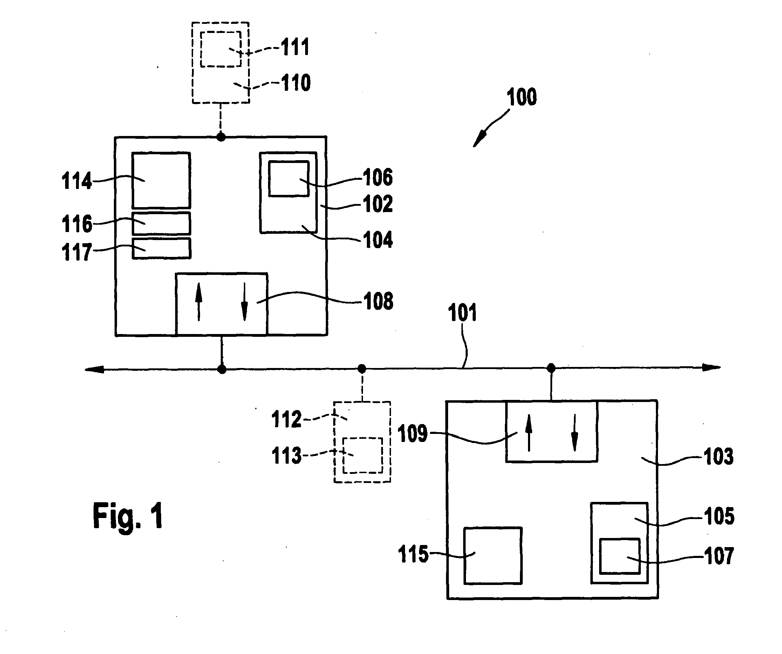

Figur 1 zeigt ein Bussystem 100 mit einem ersten Teilnehmer 102 und einem zweiten Teilnehmer 103. Diese sind über eine Kommunikationsverbindung 101 sowie entsprechende Schnittstellenelemente 108 und 109 miteinander verbunden. Der erste Teilnehmer 102 stellt beispielhaft in dem System den Zeitgeber oder Zeitmaster dar. Jeder Teilnehmer enthält einen Zeitgeberbaustein 104 bzw. 105 mit einer internen Taktquelle 106, respektive 107, wie beispielsweise einen Quarz oder auch einen Voltage Controlled Oscillator oder einen anderen Schwingkreis, wie beispielsweise ein RC-Glied darstellt. Dieser Zeitgeber 104 bzw. 105 stellt die lokale Zeit, also die lokale Uhr des jeweiligen Teilnehmer dar. Aus diesem Zeitgeberbaustein des Zeitgebers, also des ersten Teilnehmers 102, ergibt sich beispielsweise die Zeitinformation, welche mit der Zeitmarke verglichen wird. Die Zeitmarke selbst bzw. der Wert der Zeitmarke ist beispielsweise in einem Register 116 abgelegt. Optional ist ein zusätzliches Register 117 vorgesehen, in welchem beispielsweise die schon erwähnte Zusatzzeitmarke, die anstelle der unveränderten Zeitmarke verwendet wird, abgelegt werden kann. Eine Verarbeitungseinheit 114 steuert den erfindungsgemäßen Prozess, insbesondere den Vergleich der Zeitinformationen mit der Zeitmarke oder auch beispielsweise die Umschaltung im Rahmen einer Verschiebung oder Synchronisation auf die Zusatzzeitmarke in Register 117 respektive einen dort enthaltenen Zeitmarkenwert und entsprechend die Verknüpfung des Zeitmarkenwertes (eben als Addition, Subtraktion, Multiplikation oder Division) mit der Zeitmarke. Gestrichelt dargestellt mit 110 und 112 ist eine externe Zeitbasis, die entweder die Zeitbasis 112 mit der Kommunikationsverbindung 101 verbunden sein kann, oder über einen Teilnehmer, insbesondere den Zeitgeber, wie Zeitbasis 110, verbunden sein kann. Auch diese externen Zeitgeberbausteine oder externen Zeitbasen enthalten eine interne Zeit oder Taktquelle, wie eben den Quarz, Voltage Controlled Oscillator oder Schwingkreis. Diese externen Zeitbasen oder externen Zeitgeber sind beispielsweise in nicht im Bussystem 100 enthaltenen Steuergeräten oder Steuereinheiten, Diagnosegeräten usw. enthalten. Sie sind beispielsweise Teil eines weiteren Bussystems oder auch eines Teilnehmers eines weiteren Bussystems, wobei eine Synchronisierung zwischen diesen externen Zeitbasen und der Zeit des Bussystems 100, also insbesondere der Zykluszeit, bzw. u.U. auch der globalen Zeit, erfolgen kann. So sind weitere Bussysteme wie TTCAN-Systeme oder auch FlexRay-Systeme oder auch andere, insbesondere zeitgesteuerte Systeme mit dem erfindungsgemäßen Bussystem synchronisierbar, indem das erfindungsgemäße Bussystem eine Verschiebung, bezogen auf den Basiszyklus, also die Zykluszeit, durch Veränderung der Zeitmarke und damit Verschiebung der Triggerinformation zur Auslösung der Referenznachricht durchführt.

Es gibt dabei verschiedene Möglichkeiten bzw. Bedingungen, bei deren Erfüllung der Zeitmaster oder Time Master oder Zeitgeber dazu veranlasst wird, eine Referenznachricht zu senden.

Bezogen auf ein TTCAN-System ist dabei zu unterscheiden, im Rahmen der Option Event-Synchronised Time Triggered Communication, ob diese verwendet wird oder nicht.

Wenn die Option Event-Synchronised Time Triggered Communication verwendet wird, wird eine Referenznachricht durch den Time Master gestartet, wenn die Zykluszeit oder Cycle Time dem Wert der Zeitmarke, also die Time Mark, des Triggers beim TTCAN des Tx_Ref_Triggers erreicht.

Bei der Verwendung der Option Event-Synchronised Time Triggered Communication gibt es drei Möglichkeiten, zu denen eine Referenznachricht gestartet wird.
1. Wenn die Zykluszeit oder Cycle Time den Wert der Zeitmarke, also der Time Mark, des Tx_Ref_Triggers erreicht und in der letzten Referenznachricht das Next_is_Gap-Bit nicht gesetzt war.
2. Wenn in der letzten Referenznachricht das Next_is_Gap-Bit gesetzt war und keine Referenznachricht gesendet wurde, bis die Zykluszeit, also die Cycle Time, den Wert der Zeitmarke, also die Time Mark, des Triggers oder der Triggerinformation, hier insbesondere des Tx_Ref_Trigger_Gap erreicht.
3. Wenn in der letzten Referenznachricht das Next_is_Gap-Bit gesetzt war und die Cycle Time oder Zykluszeit den Wert der Time Mark, also der Zeitmarke, des Tx_Ref_Triggers, also der Triggerinformation, erreicht hatte und dann ein Ereignis, wie beispielsweise ein Signalwechsel, auftritt, auf das synchronisiert werden soll. Solche Ereignisse können auch Flankenwechsel usw. sein. Dies ist dann die Eventsynchronisierung, also die Ereignissynchronisierung der Phase.

Eine solche Synchronisierung, also insbesondere Phasensynchronisierung ist somit auch ohne die Option Event-Synchronised Time Triggered Communication möglich, wenn die vorgegebene Zeitmarke oder Time Mark des Tx_Ref_Triggers für die Durchführung der Synchronisierung verändert wird, insbesondere durch einen anderen Wert oder eben durch eine andere Zeitmarke, eine Zusatzzeitmarke ersetzt wird, respektive durch Addition oder Subtraktion eines Zeitmarkenwertes oder auch Multiplikation mit oder Division durch einen Zeitmarkenwert ersetzt wird. Dies erfolgt im ersten Fall, dass eben die Zeitmarke, beispielsweise im Register 116 von Figur 1, durch eine Zusatzzeitmarke in Register 117 von Figur 1 ersetzt wird. Soll die Synchronisierung erfolgen, wird von Register 116 auf Register 117 im Rahmen des entsprechenden Basiszyklus umgeschaltet und die Zusatzzeitmarke in Register 117 wird dann durch die Zeitinformation, insbesondere des Zeitgeberbausteins 104 erreicht, wodurch dann durch Auslösung des Triggers, eben hier Tx_Ref_Trigger, die Referenznachricht zur Einleitung des entsprechenden Basiszyklus gestartet wird. Ebenso kann aber in Register 117 der entsprechende Zeitmarkenwert eingeschrieben werden, der dann über die Verarbeitungseinheit 114 mit dem unveränderten oder Original-Zeitmarkenwert oder der Original-Zeitmarke (Time Mark) in Register 116 entsprechend einer vorgebbaren Verknüpfung verknüpft wird, so dass sich ein veränderter Wert, also eine veränderte Zeitmarke im Register 117 oder im Register 116 ergibt. Diese Modifikation des unveränderten Zeitmarkenwertes oder der unveränderten Zeitmarke kann durch Addition eines Zeitmarkenwertes erfolgen oder auch durch Subtraktion eines Zeitmarkenwertes, wodurch eben eine Verlängerung oder Verkürzung des entsprechenden Basiszyklus, der durch die entsprechende Referenznachricht festgelegt wird, erfolgt. Gleiches gilt für eine Multiplikation mit einem solchen Zeitmarkenwert oder die Division durch einen solchen Zeitmarkenwert, so dass auch dadurch die Zeitmarke verändert, eben erhöht oder erniedrigt werden kann, wodurch eben durch Erhöhung und Erniedrigung dieser Zeitmarke eine Verlängerung oder Verkürzung wenigstens eines entsprechenden Basiszyklus erfolgen kann. Dadurch wird der Time Trigger, also die Triggerinformation für die Referenznachricht verschoben, wodurch die Referenznachricht eben entsprechend früher oder später ausgelöst wird.

Dabei kann der Bereich, in dem der Trigger verschoben werden kann, also der Bereich, in dem die Zeitmarke, die Time Mark, verändert werden kann, festgelegt werden, insbesondere durch die Systemkonfiguration, beispielsweise um einen reibungslosen Ablauf der einzelnen Basiszyklen hintereinander zu garantieren, oder auch den Verlust einzelner Basiszyklen oder ein Überlappen einzelner Basiszyklen und damit eine potenzielle Kollision der in diesen Basiszyklen übertragenen Nachrichten zu vermeiden. Das heißt, dass entweder die Zusatzzeitmarke bezüglich der Werte wie sie diese einnehmen darf, also der Grenzen, vorgegeben wird, oder eben der Zeitmarkenwert, der zur Modifikation der Zeitmarke herangezogen wird, nur innerhalb bestimmter Grenzen liegen darf. Dies hängt natürlich von der Art der verwendeten Modifikation, also Addition, Subtraktion, Multiplikation oder Division ab.

Bei der Ausführung des Verfahrens sind nun zwei Variationen möglich, zum einen die Verschiebung relativ zur eingestellten Time Mark, also der Zeitmarke und zum anderen eine Verschiebung auf einen vorgegebenen Zeitpunkt.

Die Verschiebung relativ zur eingestellten Time Mark oder Zeitmarke, also die Verschiebung um eine bestimmte Zeitspanne, d.h. um eine gemessene oder errechnete Abweichung von einem gewünschten Time Trigger auszugleichen, erfolgt dadurch, dass insbesondere der Host, also der externe, zu synchronisierende Teilnehmer, oder aber auch der Bussystem-interne Zeitgeber, also der Time Master, den entsprechenden Zeitmarkenwert, also beispielsweise den Differenzwert, positiv oder negativ, oder auch den entsprechenden Multiplikator oder Quotienten in ein Register, insbesondere Register 117, des TTCAN-Controllers, der als Time Master arbeitet, schreibt und die Verschiebung aktiviert bzw. einschaltet. Der TTCAN-Controller als Time Master triggert die nächste Referenznachricht dann, wenn die Zykluszeit oder die Cycle Time den entsprechenden Wert, also beispielsweise die Summe aus Time Mark und Differenzwert oder auch bei Multiplikation oder Division den entsprechenden Ergebniswert erreicht. Bei der Synchronisation kann dann für die danach folgenden Referenznachrichten nur die Zeitmarke selbst, also die ursprüngliche unveränderte Zeitmarke, berücksichtigt werden, wodurch die konstanten Basiszyklen weiter eingesetzt werden, bis insbesondere der Host die nächste Synchronisierung durchführt. Denkbar ist aber auch, dass bestimmte Muster von Zeitmarkenwerten oder auch Zusatzzeitmarken nacheinander oder wiederholt in die Register, insbesondere Register 117, eingetragen werden und abgearbeitet werden, wodurch sich spezielle Zeitmuster, bezogen auf die Basiszyklen, einstellen lassen. Bei einer einfachen Synchronisierung erfolgt eine solche Verschiebung eben einmalig, um dann die normalen Basiszyklen in konstanter vorgegebener Länge synchron mit dem Synchronisierungspartner ablaufen zu lassen.

Die zweite Möglichkeit ist die Verschiebung der nächsten Referenznachricht auf einen bestimmten Zeitpunkt, was dadurch erfolgt, dass der Host, also der zu synchronisierende externe Verfahrensbeteiligte (oder auch wieder der Time Master selbst) den entsprechenden Zeitwert der Time Mark, in ein Register des TTCAN-Controllers, insbesondere Register 116 oder Register 117, schreibt und zwar desjenigen TTCAN-Controllers, der als Time Master arbeitet und dann die Verschiebung aktiviert bzw. einschaltet. Diese Aktivierung der Verschiebung bzw. des Einschaltens der Verschiebung, wird in der Regel durch den aufzusynchronisierenden externen Verfahrensbeteiligten getriggert bzw. erfolgt. Der TTCAN-Controller triggert daraufhin die nächste Referenznachricht dann, wenn die Zykluszeit, die Cycle Time, den vorgegebenen Zeitwert der Time Mark erreicht. Für die danach folgenden Referenznachrichten wird nur die Time Mark berücksichtigt, die bereits vorher vorlag und zwar so lange, bis der Host die nächste Synchronisierung durchführt.

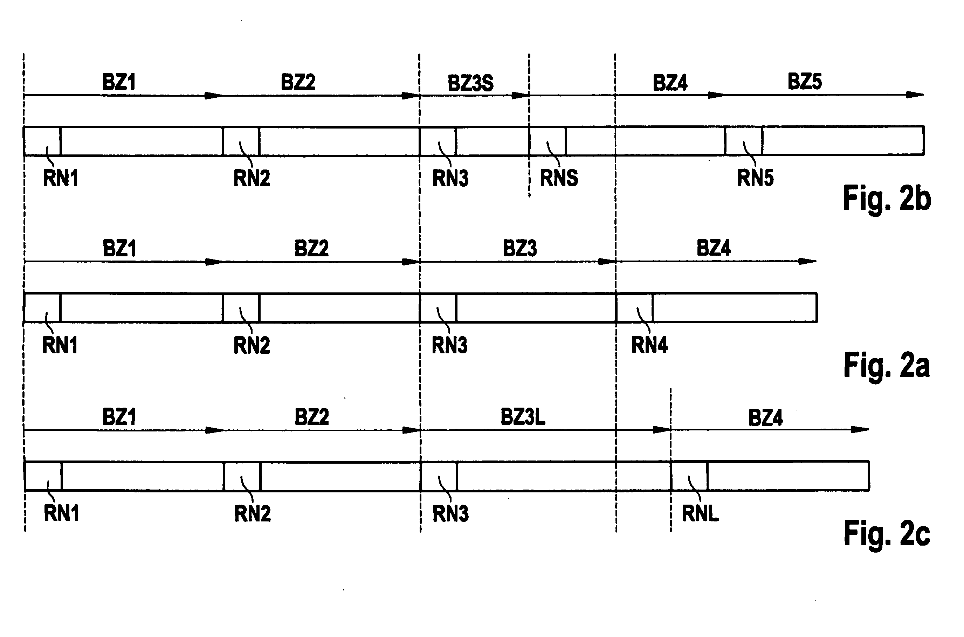

Dies soll noch einmal anhand der Figur 2, bestehend aus den Figuren 2a, 2b und 2c, erläutert werden. Figur 2a zeigt dazu eine Abfolge von 4 Basiszyklen, BZ1 bis BZ4, eingeleitet durch die entsprechenden Referenznachrichten RN1 bis RN4, wobei diese eben wiederholt in einem konstanten zeitlichen Abstand übermittelt werden. Dadurch erhalten alle Basiszyklen BZ1, BZ2, BZ4 und insbesondere BZ3 die gleiche Länge. In Figur 2b wird nun der Basiszyklus BZ3 insbesondere im Rahmen einer Synchronisation verkürzt. Die Basiszyklen BZ1 und BZ2 haben die ursprüngliche Länge ausgelöst durch die Referenznachrichten RN1 und RN2. RN3 nun, also Referenznachricht des Basiszyklus 3, löst diesen ganz normal wie vorgegeben aus. Die nächste Referenznachricht RNS wird aber durch den entsprechenden Zeitmarkenwert und den darauf beruhenden Trigger so ausgelöst, dass der Basiszyklus 4 deutlich früher beginnt. Dadurch wird der Basiszyklus 3 zu BZ3S verkürzt. An diesen schließt sich dann der Basiszyklus 4 und ein normaler Basiszyklus 5, ausgelöst durch eine Referenznachricht RN5, an.

Figur 2c zeigt nun die Verlängerung des Basiszyklus BZ3 durch eine später ausgesendete Referenznachricht. Auch hier sind wieder die üblichen beiden ersten Basiszyklen BZ1 und BZ2, ausgelöst durch die Referenznachrichten RN1 und RN2, dargestellt. Auch RN3 wird in einem zeitlich vorgebbaren, hier zu RN1 und RN2 äquidistanten Abstand gestartet. Allerdings wird die nachfolgende Referenznachricht RNL eben durch Veränderung des Zeitmarkenwertes und damit ein verspätetes Auslösen der Triggerinformation erst deutlich später, als in Figur 2a dargestellt, ausgelöst. Das heißt, der Basiszyklus 4, BZ4, wird erst durch RNL verspätet ausgelöst. Dadurch verlängert sich der Basiszyklus 3 zu BZ3L, wie in Figur 2c dargestellt. Damit kann insbesondere der Host-Controller die Synchronisierung mit einem einzigen Zugriff auf den TTCAN-Controller durchführen, und braucht dabei nicht auf Rückmeldungen vom TTCAN-Controller (Referenznachricht mit Next_is_Gap-Bit) zu warten. Zusätzlich ist die Synchronisierung in beide Richtungen möglich. Somit kann mit dem erfindungsgemäßen Verfahren ein Basiszyklus oder Basis Cycle verlängert oder verkürzt werden. Darüber hinaus kann aber auch, getriggert durch den Host Controller oder auch im Time Master des TTCAN-Systems vorgegeben, die Länge des Basiszyklus variabel, insbesondere auch einem bestimmten Zeitmuster gehorchend, eingespeist werden. So ist es denkbar, Basiszyklen verschiedener Länge zu einem Gesamtzyklus zu verknüpfen, wodurch beliebige Synchronisierungen und Datenübertragungen ermöglicht werden.

## Patentansprüche

1. Verfahren zur Steuerung eines Bussystems mit wenigstens zwei Teilnehmern, wobei ein erster Teilnehmer wiederholt eine Referenznachricht in wenigstens einem vorgebbaren zeitlichen Abstand über das Bussystem überträgt, wobei die Referenznachricht durch eine zeitliche Triggerinformation ausgelöst wird, wenn eine Zeitinformation einen vorliegenden Zeitwert einer der Triggerinformation zugeordneten Zeitmarke erreicht, **dadurch gekennzeichnet, dass** der vorliegende Zeitwert der Zeitmarke derart verändert wird, dass bei Erreichen des veränderten Zeitwertes der Zeitmarke durch die Zeitinformation eine zeitliche Verschiebung der Triggerinformation erfolgt **und bei nachfolgenden Referenznachrichten die Triggerinformation bei Erreichen des unveränderten vorliegenden Zeitwertes der Zeitmarke ausgelöst wird.**

2. Verfahren nach Anspruch 1, **dadurch gekennzeichnet, dass** der vorliegende Zeitwert der Zeitmarke durch Addition oder Subtraktion mit einem Zeitmarkenwert verändert wird.

3. Verfahren nach Anspruch 1, **dadurch gekennzeichnet, dass** der vorliegende Zeitwert der Zeitmarke durch Multiplikation mit oder Division durch einen Zeitmarkenwert verändert wird.

4. Verfahren nach Anspruch 1, **dadurch gekennzeichnet**, das der vorliegende Zeitwert der Zeitmarke nur innerhalb eines vorgebbaren Zeitbereiches veränderbar ist.

5. Verfahren nach Anspruch 1, dadurch gekennzeichet, dass die Zeitinformation ein Maß für den zeitlichen Abstand zwischen zwei Referenznachrichten als Zykluszeit des Bussystems darstellt.

6. Verfahren nach Anspruch 1, **dadurch gekennzeichnet, dass** es sich bei dem Bussystem um ein TTCAN Bussystem nach ISO 11898-4 handelt.

7. Vorrichtung zur Steuerung eines Bussystems mit wenigstens zwei Teilnehmen, wobei ein erster Teilnehmer wiederholt eine Referenznachricht in wenigstens einem vorgebbaren zeitlichen Abstand über das Bussystem überträgt, wobei erste Mittel enthalten sind, die die Referenznachricht durch eine zeitliche Triggerinformation auslösen, wenn eine Zeitinformation einen vorliegenden Zeitwert einer der Triggerinformation zugeordneten Zeitmarke erreicht, **dadurch gekennzeichnet, dass** zweite Mittel derart enthalten sind, dass der vorliegende Zeitwert der Zeitmarke derart verändert wird, dass bei Erreichten des veränderten Zeitwertes der Zeitmarke durch die Zeitinformation eine zeitliche Verschiebung der Triggerinformation erfolgt **und bei nachfolgenden Referenznachrichten die Triggerinformation bei Erreichen des unveränderten vorliegenden Zeitwertes der Zeitmarke ausgelöst wird.**

8. Bussystem mit wenigstens zwei Teilnchmern, mit einer Vorrichtung zur Steuerung des Bussystems, wobei ein erster Teilnehmer wiederholt eine Referenznachricht in wenigstens einem vorgebbaren zeitlichen Abstand über das Bussystem überträgt, wobei erste Mittel enthalten sind, die die Rererenznachricht durch eine zeitliche Triggerinformation auslösen wenn eine Zeitinformation einen vorliegenden Zeitwert einer, der Triggerinformation zugeordneten, Zeitmarke erreicht **dadurch gekennzeichnet, dass** zweite Mittel derart enthalten sind, dass der vorliegende Zeitwert der Zeitmarke derart verändert wird, dass bei Erreichen des veränderten Zeitwertes der Zeitmarke durch die Zeitinformation eine zeitliche Verschiebung der Triggerinformation erfolgt **und bei nachfolgenden Referenznachrichten die Triggerinformation bei Erreichen des unveränderten vorliegenden Zeitwertes der Zeitmarke ausgelöst wird.**

## Claims

1. Method for controlling a bus system having at least two subscribers, a first subscriber repeatedly transmitting a reference message via the bus system in at least one predefinable interval of time, the reference message being triggered by an item of temporal trigger information if an item of time information reaches a present time value of a time stamp assigned to the trigger information, **characterized in that** the present time value of the time stamp is changed in such a manner that, when the changed time value of the time stamp is reached by the time information, the trigger information is temporally shifted and, in the case of subsequent reference messages, the trigger information is triggered when the unchanged present time value of the time stamp is reached.

2. Method according to Claim 1, **characterized in that** the present time value of the time stamp is changed by adding or subtracting a time stamp value.

3. Method according to Claim 1, **characterized in that** the present time value of the time stamp is changed by multiplying or dividing by a time stamp value.

4. Method according to Claim 1, **characterized in that** the present time value of the time stamp can be changed only within a predefinable time range.

5. Method according to Claim 1, **characterized in that** the time information is a measure of the interval of time between two reference messages as the cycle time of the bus system.

6. Method according to Claim 1, **characterized in that** the bus system is a TTCAN bus system according to ISO 11898-4.

7. Apparatus for controlling a bus system having at least two subscribers, a first subscriber repeatedly transmitting a reference message via the bus system in at least one predefinable interval of time, first means being included which trigger the reference message by an item of temporal trigger information if an item of time information reaches a present time value of a time stamp assigned to the trigger information, **characterized in that** second means are included such that the present time value of the time stamp is changed in such a manner that, when the changed time value of the time stamp is reached by the time information, the trigger information is temporally shifted and, in the case of subsequent reference messages, the trigger information is triggered when the unchanged present time value of the time stamp is reached.

8. Bus system having at least two subscribers, and having an apparatus for controlling the bus system, a first subscriber repeatedly transmitting a reference message via the bus system in at least one predefinable interval of time, first means being included which trigger the reference message by an item of temporal trigger information if an item of time information reaches a present time value of a time stamp assigned to the trigger information, **characterized in that** second means are included such that the present time value of the time stamp is changed in such a manner that, when the changed time value of the time stamp is reached by the time information, the trigger information is temporally shifted and, in the case of subsequent reference messages, the trigger information is triggered when the unchanged present time value of the time stamp is reached.

## Revendications

1. Procédé de commande d'un système de bus qui présente au moins deux participants, un premier participant transférant sur le système de bus un message de référence en le répétant à au moins un écart temporel prédéterminé, l'envoi du message de référence étant déclenché par une information temporelle de gâchette lorsqu'une information temporelle atteint une valeur temporelle existante d'un repère temporel associé à l'information de gâchette,
**caractérisé en ce que**
la valeur temporelle existante du repère temporel est modifiée de telle sorte qu'un décalage temporel de l'information de gâchette a lieu lorsque la valeur temporelle modifiée du repère temporel est atteinte par l'information temporelle et que pour les messages de référence suivants, l'information de gâchette est déclenchée lorsque la valeur temporelle existante non modifiée du repère temporel est atteinte.

2. Procédé selon la revendication 1, **caractérisé en ce que** la valeur temporelle existante du repère temporel est modifiée par addition ou soustraction d'une valeur de repère temporel.

3. Procédé selon la revendication 1, **caractérisé en ce que** la valeur temporelle existante du repère temporel est modifiée par multiplication ou division par une valeur de repère temporel.

4. Procédé selon la revendication 1, **caractérisé en ce que** la valeur temporelle existante du repère temporel ne peut être modifiée que dans une plage temporelle prédéterminée.

5. Procédé selon la revendication 1, **caractérisé en ce que** l'information temporelle représente une mesure de l'écart temporel entre deux messages de référence en tant que durées d'un cycle du système de bus.

6. Procédé selon la revendication 1, **caractérisé en ce que** le système de bus est un système de bus TTCAN selon ISO 11898-4.

7. Dispositif de commande d'un système de bus qui présente au moins deux participants, un premier participant transférant sur le système de bus un message de référence en le répétant à au moins un écart temporel prédéterminé, des premiers moyens étant prévus pour déclencher l'envoi du message de référence par une information temporelle de gâchette lorsqu'une information temporelle atteint une valeur temporelle existante d'un repère temporel associé à l'information de gâchette,
**caractérisé en ce que**
le dispositif présente des deuxièmes moyens tels que la valeur temporelle existante du repère temporel est modifiée de telle sorte que lorsque la valeur temporelle modifiée du repère temporel est atteinte, l'information temporelle entraîne un décalage temporel de l'information de gâchette et
**en ce que** pour les messages de référence suivants, l'information de gâchette est déclenchée lorsque la valeur temporelle existante non modifiée du repère temporel est atteinte.

8. Système de bus présentant au moins deux participants, un dispositif de commande du système de bus, un premier participant transférant sur le système de bus un message de référence en le répétant à au moins un écart temporel prédéterminé, le système de bus contenant des premiers moyens pour déclencher l'envoi du message de référence par une information temporelle de gâchette lorsqu'une information temporelle atteint une valeur temporelle existante d'un repère temporel associé à l'information de gâchette,
**caractérisé en ce que**
le système de bus présente des deuxièmes moyens tels que la valeur temporelle existante du repère temporel est modifiée de telle sorte que lorsque la valeur temporelle modifiée du repère temporel est atteinte, l'information temporelle entraîne un décalage temporel de l'information de gâchette et
**en ce que** pour les messages de référence suivants, l'information de gâchette est déclenchée lorsque la valeur temporelle existante non modifiée du repère temporel est atteinte.
